# EUROPEAN PATENT SPECIFICATION

(11) **EP 1 349 642 B1**
(45) Date of publication and mention of the grant of the patent: **07.11.2007**
(21) Application number: 01273215.2
(22) Date of filing: 30.11.2001
(51) Int. Cl.: B01D 63/02, B01D 65/00, B29C 70/84, B01D 63/10

(54) **MEMBRANE FILTER**
MEMBRANFILTER
FILTRE A MEMBRANE

(30) Priority: 09.01.2001 NL 1017061
(43) Date of publication of application: 08.10.2003
(73) Proprietor: Vasse, Simon Roelof, 7772 AM Hardenberg (NL); Colijn, Albert, 9203 KW Drachten (NL)
(72) Inventor: Vasse, Simon Roelof, 7772 AM Hardenberg (NL); Colijn, Albert, 9203 KW Drachten (NL)
(74) Representative: 't Jong, Bastiaan Jacob
(86) International application number: PCT/NL2001/000868
(87) International publication number: WO 2002/055183

(56) References cited:
- EP-A- 0 706 818
- US-A- 5 069 353
- PATENT ABSTRACTS OF JAPAN vol. 013, no. 414 (C-635), 13 September 1989 (1989-09-13) -& JP 01 151908 A (TEIJIN LTD), 14 June 1989 (1989-06-14) -& DATABASE WPI Derwent Publications Ltd., London, GB; AN 1989-215620 XP002175942
- PATENT ABSTRACTS OF JAPAN vol. 1999, no. 12, 29 October 1999 (1999-10-29) -& JP 11 197462 A (TENNEX CORP), 27 July 1999 (1999-07-27) -& DATABASE WPI Derwent Publications Ltd., London, GB; AN 1999-472337 XP002175943
- PATENT ABSTRACTS OF JAPAN vol. 018, no. 233 (C-1195), 28 April 1994 (1994-04-28) -& JP 06 023243 A (MITSUBISHI RAYON CO LTD), 1 February 1994 (1994-02-01) & DATABASE WPI Derwent Publications Ltd., London, GB; AN 1994-071123
- PATENT ABSTRACTS OF JAPAN vol. 002, no. 136 (C-027), 11 November 1978 (1978-11-11) -& JP 53 102878 A (ASAHI CHEM IND CO LTD), 7 September 1978 (1978-09-07) -& DATABASE WPI Derwent Publications Ltd., London, GB; AN 1979-00568B XP002175944

## Description

The invention relates to a membrane filter.

Known membrane filters with membrane filter capillaries consist of a PVC pipe sleeve in which the capillaries are encapsulated with a synthetic resin on both sides. At both ends this pipe sleeve is provided on the outside by means of glueing with a strengthening bush in which a peripheral groove is arranged by means of a machining operation. For discharge of the filtrate a further one or two additional bushes are moreover arranged on which the connections are provided. The drawback of such a membrane filter is the usually heavy construction, since extra material is required for the strengthening bush, and that a glueing operation and a machining operation have to be carried out, whereby the cost of such a membrane filter is high.

It is an object of the present invention to obviate the above stated drawbacks. This object is achieved with a membrane filter according to claim 2.

The advantage of such a membrane filter according to the invention is that the outer wall of the extruded tube is not damaged by machining operations, whereby the outer wall retains its full strength and glueing of turned or injection moulded parts is unnecessary. The synthetic resin plug could for example comprise polypropyleen. Another advantage of the membrane filter according to the invention is that the synthetic resin, also referred to as potting, arranged in the tube gives additional strength in both axial and radial direction in that the groove protrudes inward and the synthetic resin has formed around it. Another great advantage is that this membrane filter can be designed with a minimal material weight.

Extruded tube is readily available in diverse diameters at a relatively low price and in different pressure classes, while it provides sufficient strength to withstand the pressures. In addition, the length of an extrusion tube is unlimited in terms of the production process, with the result that membrane filters according to the invention can be manufactured to any desired length and at low cost.

In a preferred embodiment according to the invention the groove is arranged by heating and then deforming a tube end.

The groove can be formed such that it is suitable for a "victaulic" clamp connection which connects onto a manifold.

The groove can also be used as key way for a sleeve for sliding over the tube end.

In another embodiment of the membrane filter according to the invention the tube comprises a radially extending connecting opening. A pipe part can be arranged hereon. The tube wall can be deformed by heating the tube such that the opening with the tube end thereon can be formed integrally with the tube. Connections can thus be made to the tube in simple manner.

A membrane filter according to the invention can further comprise perforations arranged in the tube wall. Such an embodiment can be used in the case the filter is suspended in a basin and the medium for cleaning is sucked through the filter.

The tube of the membrane filter according to the invention can comprise polyvinyl chloride, polyethylene or polypropylene, or another thermoplastic.

The invention further comprises a method for manufacturing a membrane filter according to claim 1.

Applicant assumes that when axial and radial forces are exerted on the filter housing at the position of the groove, the potting arranged on the inside of the tube also functions as strengthening of the wall in both directions. In addition, it is assumed that during forming of the groove the wall is strengthened as a result of biaxial orientation.

These and other features of the invention are further elucidated with reference to the annexed drawings.
Figure 1 shows a perspective view with partly broken-away parts of a first embodiment of a membrane filter according to the invention;
figure 2 shows a perspective view with partly broken-away parts of a second embodiment of a membrane filter according to the invention.

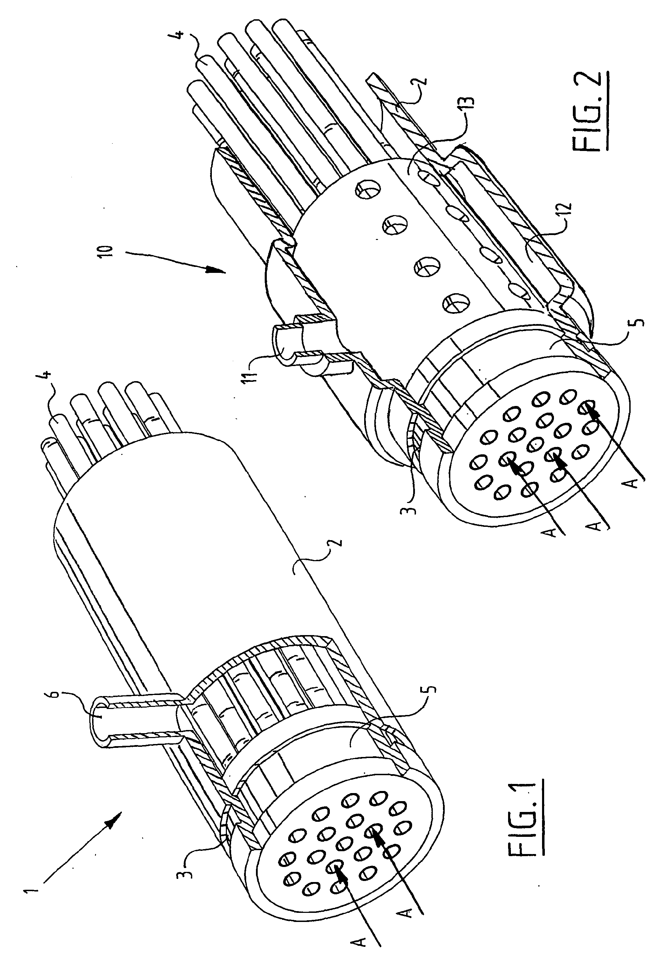

Figure 1 shows a first embodiment of a membrane filter 1. This membrane filter 1 has an extruded tube 2 comprising on its end a groove 3 arranged by deformation. Arranged in tube 2 are elongate capillary tubes 4 which are encapsulated at the end in a synthetic resin plug 5. Medium for filtering will be supplied in the direction of arrow A to capillary tubes 4 and will then flow radially out of the tubes, and can subsequently flow out of tube 2 via the outlet opening 6 arranged thereon.

Because the synthetic resin plug 5 is cast on the inside around groove 3, it will impart extra strength to the end of tube 2 and to groove 3.

Figure 2 shows a second embodiment of a membrane filter according to the invention. This filter 10 corresponds in large measure with the filter according to figure 1, and the same components are therefore designated with the same reference numerals.

At the position where the connection 11 is arranged along which the medium can flow away, a peripheral chamber 12 is formed in tube wall 2. This can be formed in a manner similar to groove 3. A perforated bush 13 is further placed around the capillary tubes 4 at the position of chamber 12. This bush has the function of protecting capillary tubes 4 when the membrane filter is cleaned. This cleaning takes place by a cleaning liquid being injected via opening 11 and then entering capillary tubes 4 in radial direction. The flow direction is opposed to the flow direction during normal use.

It is possible to embody groove 3 as a helical groove, whereby a connecting piece can be screwed onto the membrane filter. Before the filter elements are potted in the synthetic resin, the tube surface must be treated at this location so as to obtain a good adhesion. In addition, it is also possible that, instead of the capillary tubes 4 being potted in the housing, other embodiments of filter elements are encapsulated, for instance those of the "spirally wound" type.

A third embodiment (not shown) of a membrane filter according to the invention corresponds for the greater part with for instance the membrane filter 1 of figure 1. In this third embodiment the tube wall 2 is herein provided with a large number of perforations. Not only can medium hereby flow out or in via outlet opening 6, but also via the perforations. Membrane filters in accordance with this third embodiment are advantageous in the treatment of water. For this purpose these membrane filters are suspended in a basin of water for cleaning and the water for cleaning is drawn via the perforations into the filter through capillary tubes 4. The advantage of such an arrangement of the filter elements and suction of the medium for filtering is that lower pressures can be used, whereby capillary tubes 4 will become contaminated less rapidly.

## Claims

1. Method for manufacturing a membrane filter 1, 10, which method comprises the steps of:
- extruding a tube 2;
- heating an end of the extruded tube 2;
- deforming the end such that a groove 3 is formed in the end of the tube 2 on the outer circumferential surface;
- placing in the tube 2 a number of elongate filter elements 4 extending in longitudinal direction; and
- casting synthetic resin 5 in the at least one end to form a plug.

2. Membrane filter 1, 10 comprising:
- an extruded tube 2 with a groove 3 arranged through deformation on at least one end on the outer circumferential surface;
- a number of elongate filter elements 4 extending in longitudinal direction; and
- a synthetic resin plug 5 which is arranged in the at least one end and through which the elongate filter elements 4 extend.

3. Membrane filter 1, 10 as claimed in claim 2, wherein the groove 3 is arranged by heating and then deforming the tube end.

4. Membrane filter 1, 10 as claimed in either of the foregoing claims 2 or 3, wherein the tube 2 comprises a radially extending connecting opening 6.

5. Membrane filter 1, 10 as claimed in claim 4, wherein a pipe part is arranged on the connecting opening 6.

6. Membrane filter as claimed in any of the foregoing claims 2-5, wherein perforations are arranged in the tube wall 2.

7. Membrane filter 1, 10 as claimed in any of the foregoing claims 2-6, wherein at least the tube comprises polyvinyl chloride, polyethylene, polypropylene or another thermoplastic.

## Patentansprüche

1. Verfahren zur Herstellung eines Membranfilters 1, 10, wobei das Verfahren die Schritte umfasst:
- Extrudieren eines Rohres 2,
- Erwärmen eines Endes des extrudierten Rohres 2,
- Verformen des Endes, so dass eine Nut 3 im Ende des Rohres 2 auf der äußeren Umfangsoberfläche gebildet wird,
- Einbringen eine Anzahl von länglichen Filterelementen 4 in das Rohr 2, welche sich in Längsrichtung erstrecken und
- Gießen von synthetischem Harz 5 in das zumindest eine Ende, um einen Stopfen zu bilden.

2. Membranfilter 1, 10, umfassend:
- ein extrudiertes Rohr 2 mit einer durch Verformung angeordneten äußeren Nut 3 an zumindest einem Ende an der Umfangsoberfläche,
- eine Anzahl von länglichen Filterelementen 4, welche sich in longitudinaler Richtung erstrecken und
- ein Stöpsel aus synthetischem Harz 5, welcher in dem zumindest einen Ende angeordnet ist und durch den sich die Filterelemente 4 erstrecken.

3. Membranfilter 1, 10 gemäß Anspruch 2, wobei die Nut 3 durch Erwärmen und dann Verformen des Rohrendes angeordnet ist.

4. Membranfilter 1, 10 gemäß einem der vorhergehenden Ansprüche 2 oder 3, wobei das Rohr 2 eine sich radial erstreckende Anschlussöffnung 6 umfasst.

5. Membranfilter 1, 10 gemäß Anspruch 4, wobei ein Rohrteil an der Anschlussöffnung 6 angeordnet ist.

6. Membranfilter gemäß einem der vorhergehenden Ansprüche 2-5, wobei Perforierungen in der Rohrwand 2 angeordnet sind.

7. Membranfilter 1, 10 gemäß einem der vorhergehenden Ansprüche 2-6, wobei zumindest das Rohr Polyvinylchlorid, Polyethylen, Polypropylen oder einen anderen Thermoplast umfasst.

## Revendications

1. Procédé pour fabriquer un filtre à membrane (1, 10), lequel procédé comprend les étapes consistant à :
- extruder un tube (2) ;
- chauffer une extrémité du tube extrudé (2) ;
- déformer l'extrémité de manière qu'une rainure (3) soit formée dans l'extrémité du tube (2) sur la surface circonférentielle extérieure ;
- placer dans le tube (2) un certain nombres d'éléments filtrants allongés (4) s'étendant longitudinalement ; et
- couler une résine synthétique (5) dans l'au moins une extrémité pour former un bouchon.

2. Filtre à membrane (1, 10), comprenant :
- un tube extrudé (2) muni d'une rainure (3) formée par déformation sur au moins une extrémité sur la surface circonférentielle extérieure,
- un certain nombres d'éléments filtrants allongés (4) s'étendant longitudinalement ; et
- un bouchon en résine synthétique (5) qui est agencé à l'au moins une extrémité et à travers lequel les éléments filtrants allongés (4) s'étendent.

3. Filtre à membrane (1, 10) selon la revendication 2, dans lequel la rainure (3) est formée par chauffage, puis déformation de l'extrémité du tube.

4. Filtre à membrane (1, 10) selon l'une ou l'autre des revendications précédentes 2 ou 3, dans lequel le tube (2) comprend une ouverture de raccordement (6) s'étendant radialement.

5. Filtre à membrane (1, 10) selon la revendication 4, dans lequel un tuyau est agencé sur l'ouverture de raccordement (6).

6. Filtre à membrane (1, 10) selon une quelconque des revendications précédentes 2 à 5, dans lequel des perforations sont ménagées dans la paroi du tube (2).

7. Filtre à membrane (1, 10) selon une quelconque des revendications précédentes 2 à 6, dans lequel au moins le tube comprend du polychlorure de vinyle, du polyéthylène, du polypropylène ou un autre thermoplastique.
